# EUROPÄISCHE PATENTSCHRIFT

(11) **EP 1 698 607 B1**
(45) Veröffentlichungstag und Bekanntmachung des Hinweises auf die Patenterteilung: **22.10.2008**
(21) Anmeldenummer: 06004017.7
(22) Anmeldetag: 28.02.2006
(51) Int. Cl.: C07C 29/00, B01D 53/02, C01B 3/50

(54) **Verfahren zur Adsorberregenerierung**
Process for regeneration of adsorbents
Procédé de régéneration d'adsorbants

(30) Priorität: 01.03.2005 DE 102005009393
(43) Veröffentlichungstag der Anmeldung: 06.09.2006
(73) Patentinhaber: Linde Aktiengesellschaft, 80807 München (DE)
(72) Erfinder: Lang, Martin, 80804 München (DE)

(56) Entgegenhaltungen:
- EP-A- 0 289 877
- DE-A1- 3 914 361
- US-A- 4 469 665
- US-A- 4 546 111
- US-A1- 2003 113 257

## Beschreibung

Gegenstand der Erfindung ist ein Verfahren zur Regenerierung der Adsorber einer Adsorberstation, die zur Reinigung des einer kryogenen Gaszerlegungseinheit einer Synthesegasanlage, in der ein Oxogasprodukt oder Methanolsynthesegas gewonnen wird, zuströmenden Synthesegases eingesetzt wird, wobei dem gereinigten Synthesegasstrom hinter der Adsorberstation, jedoch noch vor seiner kryogenen Zerlegung, ein Teilstrom entnommen und als Regeneriergas zur Regenerierung der Adsorber zur Adsorberstation zurückgeführt wird, dadurch gekennzeichnet, dass das als Regeniergas verwendete Synthesegas nach dem Dunchtritt durch den oder die zu regenierenden Ads orber dem Oxogasprodukt Rzw. dem Methanolsynthesegas beigemischt wird.

Synthesegas ist ein Gasgemisch, das vorwiegend aus Wasserstoff (H₂), Kohlenmonoxid (CO) und Methan (CH₄) besteht, wobei seine genaue Zusammensetzung vom Herstellungsverfahren und den eingesetzten Rohstoffen abhängt.

Als Hauptquelle für Synthesegas ist die katalytische Dampfreformierung zu nennen, bei der Erdgas, Flüssiggas oder Naphta unter Zugabe von Wasserdampf gespalten werden. Darüber hinaus kann Synthesegas auch durch die partielle Oxidation von z. B. Schweröl oder Kohle auf wirtschaftliche Weise erzeugt werden.

Das Synthesegas selbst dient als Grundstoff für eine Vielzahl von Produkten, wozu es jedoch gereinigt und meist in seine Hauptbestandteile zerlegt werden muss. Der größte Teil des so gewonnenen CO wird zur Produktion von Ameisen- oder Essigsäure eingesetzt. Ein weiterer großer Abnehmer findet sich in der Polykarbonatindustrie, die zur Herstellung von hochreinem Phosgen CO in höchster Reinheit benötigt. Aus Synthesegas gewonnener Wasserstoff findet bei verschiedenen Hydrierprozessen Verwendung.

Zur Trennung der Synthesegaskomponenten werden in Industrieanlagen vor allem der Kondensationsprozess und die Methanwäsche angewendet, wobei es sich in beiden Fällen um kryogene Verfahren handelt. Voraussetzung für die Anwendbarkeit dieser Prozesse ist, dass das der kryogenen Gaszerlegungseinheit zugeführte Gas frei ist von Wasser, Methanol, Kohlendioxid (CO₂) und anderen Verbindungen, die bei den auftretenden niedrigen Temperaturen zur Feststoffbildung und damit zu einer Verlegung der Wärmetauscher führen würden. Das Syntheserohgas wird daher einer aus mehreren Schritten bestehenden Vorbehandlung unterzogen, während der es z. B. eine CO-Konvertierung durchläuft und in einer CO₂-Wäsche vom größten Teil der unerwünschten Stoffe gereinigt wird. Die noch verbliebenen Reste werden in einer sich anschließenden Adsorberstation adsorptiv entfernt.

Die eingesetzten Adsorberstationen bestehen aus mindestens zwei regenerierbaren Adsorbern, die jeweils mindestens ein Adsorberbett (Festbett aus einem oder mehreren geeigneten Adsorptionsmitteln) enthalten. Das vorgereinigte Syntheserohgas durchströmt das Adsorberbett und gibt dabei die in ihm enthaltenen unerwünschten Stoffe (z. B. liegt CO₂ noch mit <50mol-ppm vor), an das oder die Adsorptionsmittel ab. Nach Ablauf der Adsorptionszeit erfolgt die Umschaltung von dem mit unerwünschten Stoffen beladenen Adsorber auf einen unbeladenen Adsorber der Adsorberstation. Der beladene Adsorber wird anschließend regeneriert, d. h. von den zuvor adsorbierten Stoffen gereinigt.

Die Kapazität der eingesetzten Adsorptionsmittel ist stark temperaturabhängig. Um einen Adsorber zu regenerieren wird er daher zuerst vom Synthesegasstrom isoliert und anschließend mit heißem Regeneriergas entgegen der Strömungsrichtung des Syntheserohgases durchströmt. Die bei der erhöhten Temperatur aus dem Adsorberbett desorbierten Stoffe werden gemeinsam mit dem Regeneriergas aus dem Adsorber ausgetragen. Abhängig von seiner Zusammensetzung wird das mit den desorbierten Stoffen beladene Regeneriergas unterschiedlich behandelt.

In der Regel wird als Regeneriergas ein Teil der H₂-Fraktion (H₂-Gehalt > ca. 90mol-%; unter Druck stehend) aus der kryogenen Gaszerlegungseinheit verwendet. Soll in der Anlage neben CO auch hochreiner Wasserstoff als Produkt erzeugt werden, so wird das beladene Regeneriergas abgekühlt, anfallendes Kondensat abgetrennt, mit der übrigen H₂-Fraktion gemischt und dann einer Druckwechseladsorptionsanlage (DWA) zugeführt. Dort wird hochreiner Wasserstoff gewonnen und als Produkt an der Anlagengrenze abgegeben, während die übrigen Stoffe, die im Restgas mit niedrigem Druck anfallen (auch evtl. vorhandenes CO), anschließend unterfeuert werden. Nach der Regenerierung steht der Adsorber wieder für die Reinigung des Syntheserohgases zur Verfügung.

Die Selektivität der eingesetzten Adsorptionsmittel ist zwar hoch, jedoch wird neben den unerwünschten Stoffen auch CO - wenn auch in geringerem Maß - co-adsorbiert und aus dem Synthesegas entfernt. Ist der Partialdruck des Kohlenmonoxids im Regeneriergas geringer als im Syntheserohgas, wird ein Teil des adsorbierten CO bei der Regenerierung desorbiert. Da in der nächsten Adsorptionsphase (Reinigung des Syntheserohgases) wieder CO aus dem Syntheserohgas adsorbiert wird, kann eine solchermaßen durchgeführte Adsorberregenerierung zu Schwankungen der Zusammensetzung des in die kryogene Gaszerlegungseinheit eintretenden Synthesegases und folglich auch der an der Anlagengrenze abgegebenen Produktmengen führen. Außerdem kann eine schwankende Synthesegaszusammensetzung zu einem instabilen Betrieb der kryogenen Gaszerlegungseinheit führen, was u. U. auch zu einer Verminderung der Produktreinheit führt. Da die gewöhnlich als Regeneriergas genutzte H₂-Fraktion aus der kryogenen Gaszerlegungseinheit einen im Vergleich zum Synthesegas geringeren CO-Gehalt aufweist, treten bei dieser Verfahrensweise die oben beschriebenen negativen Erscheinungen auf.

Im Moment des Umschaltens des Syntheserohgasstromes auf einen frisch regenerierten Adsorber ist dieser noch mit Regeneriergas gefüllt, das durch das Syntheserohgas verdrängt und in die kryogene Gaszerlegungseinheit transportiert wird. Besitzt das Regeneriergas eine andere Zusammensetzung als das Syntheserohgas (z. B. bei Regenerierung mit Stickstoff (N₂)), kann es, zumindest kurzzeitig, zu unerwünschten Schwankungen der Produktqualität kommen.

Die in der kryogenen Gaszerlegungseinheit anfallende Restgasfraktion (Gemisch verschiedener Gase) reicht in der Regel quantitativ nicht aus, um alleine mit ihr die Adsorber regenerieren zu können. Eine technische Lösung sieht vor die Restgasmenge durch Zumischung eines Teils der H₂-Fraktion zu erhöhen. Da die Restgasfraktion nur mit geringem Druck anfällt, geht die zugemischte H₂-Fraktion als Produkt verloren, und es kann lediglich ihr Heizwert genutzt werden. Wegen des geringen Druckes des Restgases ist es notwendig, vor dem Umschalten des Synthesegases auf den frisch regenerierten Adsorber diesen zunächst wieder mit Synthesegas aufzudrücken, was wiederum Schwankungen für die Produktmengen und zusätzlichen Zeitaufwand bedeutet. Ein entsprechender Druckabbau muss für den beladenen Adsorber vor Beginn der Regenerierung durchgeführt werden.

Wenn die H₂-Fraktion aus der kryogenen Gaszerlegungseinheit direkt als Produktwasserstoff abgegeben werden kann, wie dies beispielsweise bei der H₂-Fraktion aus einer Methanwäsche der Fall ist, die zu ca. 99mol-% aus Wasserstoff besteht und deren CO-Gehalt unter 10mol-ppm liegt, kann diese ebenfalls nicht zur Regenerierung verwendet werden, da eine Verunreinigung des H₂-Produktes mit CO nicht zulässig ist. Darüber hinaus entsteht durch die Verwendung der H₂-Fraktion als Regeneriergas zusätzlicher Druckverlust, so dass eventuell für die gesamte H₂-Menge ein zusätzlicher Verdichter eingesetzt werden muss, um den gewünschten H₂-Produktabgabedruck zu erreichen.

Die Verwendung von Produkt-H₂ bzw. Stickstoff, welcher von jenseits der Anlagengrenze zugeführt werden muss, als Regeneriergas, ist zwar möglich, stellt jedoch einen erheblichen Kostenfaktor dar. Darüber hinaus kann der Einsatz von N₂ als Regeneriergas, zumindest kurzzeitig, zu einem unerwünscht hohen Stickstoffanteil im CO-Produkt führen. Um dies zu verhindern, kann der frisch regenerierte Adsorber vor der Umschaltung mit Synthesegas gespült werden, was jedoch wiederum zu Verlusten und zu einem Einbruch der Produktmengen führt.

Während des Anfahrbetriebs einer Synthesegasanlage steht kein oder nicht genügend Gas aus der kryogenen Gaszerlegungseinheit zur Verfügung, das als Regeneriergas genutzt werden kann. Auch in diesem Fall können Fremd-N₂ oder Produkt-H₂ als Regeneriergase verwendet werden, allerdings mit den oben beschriebenen wirtschaftlichen Nachteilen.

Aus der Patentschrift US4469665 ist ein Verfahren bekannt, bei dem zur Regenerierung der Adsorber einer Adsorberstation, die zur Reinigung des einer Synthesegasanlage zuströmenden Synthesegases eingesetzt wird, wobei dem Synthesegasstrom hinter der Adsorberstation ein Teilstrom entnommen und als Regeneriergas in die Adsorberstation eingeleitet wird. Das in der Adsorberstation beladene Regeneriergas wird stromaufwärts der Adsorberstation in den Prozess zurückgeführt.

In der Offenlegungsschrift US2003/0113257 wird Verfahren zur Produktion von Wasserstoff beschrieben. Hierbei wird aus einem Kohlenwasserstoffe enthaltenden Einsatz in einem regenerativ beheizten Reaktor durch Dampfreformierung ein Synthesegas gewonnen, aus dem nachfolgend mittels eines Adsorbersystems ein Reinwasserstoff abgetrennt wird. Zur Regenerierung der beladenen Adsorber wird ein Teil des Reinwasserstoffs als Regeneriergas verwendet. Das mit desorbierten Stoffen beladene Regeneriergas wird verbrannt, um mit den heißen Verbrennungsgasen den Reaktor zu beheizen.

Aufgabe der vorliegenden Erfindung ist es daher, ein Verfahren der eingangs genannten Art so zu gestalten, dass die Qualität und die Menge der in der kryogenen Gaszerlegungseinheit erzeugten Produkte nicht durch die Regenerierung der Adsorber beeinträchtigt werden und die Adsorber selbst dann ohne den Einsatz von Fremd- oder Produktgas regeneriert werden können, wenn kein oder nicht genügend Gas aus der kryogenen Gaszerlegungseinheit als Regeneriergas zur Verfügung steht.

Diese Aufgabe wird erfindungsgemäß dadurch gelöst, dass das als Regeneriergas verwendete Synthesegas nach dem Durchtritt durch den oder die zu regenerierenden Adsorber dem Oxogasprodukt bzw. dem Methanolsynthesegas beigemischt wird.

Das als Regeneriergas zurückgeführte Synthesegas wird zunächst aufgeheizt und entgegen der Strömungsrichtung des zu reinigenden Syntheserohgases durch den oder die zu regenerierenden Adsorber geleitet, wo es sich mit den bei der erhöhten Temperatur desorbierten Stoffen anreichert. Anschließend werden der oder die Adsorber mit kaltem Regeneriergas wieder auf Betriebstemperatur gekühlt. Da Regeneriergas und Syntheserohgas nahezu die gleichen Zusammensetzungen aufweisen und sich die CO-Partialdrücke in beiden Gasen nicht wesentlich unterscheiden, kommt es in der folgenden Adsorptionsphase (Reinigung des Syntheserohgases) weder zu einer Co-Adsorption von Kohlenmonoxid noch zu einer Änderung der Synthesegaszusammensetzung aufgrund der auszuspülenden Regeneriergasmenge in dem oder den Adsorbern und damit auch nicht zu den oben beschriebenen Schwankungen der Produktqualität und der Produktmenge.

Erfindungsgemäß wird das mit desorbierten Stoffen beladene Regeneriergas bis vor die CO₂-Wäsche zurückgeführt und an dieser Stelle in den Syntheserohgasstrom eingespeist. Auf diese Weise geht es dem Prozess nicht verloren. In der CO₂-Wäsche wird ein Großteil der bei der Adsorberregenerierung desorbierten Stoffe wieder entfernt, so dass es zu keiner Anreicherung der entsprechenden Komponenten im Syntheserohgasstrom kommt.

Zur Rückführung des Regeneriergases wird zweckmäßigerweise mit Hilfe eines Verdichters durchgeführt. Verschiedene Ausgestaltungen des erfindungsgemäßen Verfahrens sehen vor, dass der Verdichter vor oder hinter der Adsorberstation in der Regeneriergasleitung oder vor oder hinter der CO₂-Wäsche in der Synthesegasleitung angeordnet wird.

Das erfindungsgemäße Verfahren mit Rückführung des beladenen Regeneriergases vor die CO₂-Wäsche kann sowohl während des Normal- wie auch des Anfahrbetriebes einer Synthesegasanlage angewendet werden.

Wird in der Synthesegasanlage Oxogas (Gemisch aus H₂ und CO mit einem H₂:CO-Verhältnis von ca. 1:1) oder Methanolsynthesegas als Produkt erzeugt, so sieht eine Variante des erfindungsgemäßen Verfahrens vor, das beladene Regeneriergas nicht vor die CO₂-Wäsche zurückzuführen, sondern in das Oxogas- bzw. Methanolsynthesegasprodukt einzuspeisen. Reicht der Unterschied zwischen dem Druck an der Entnahmestelle des als Regeneriergas genutzten Synthesegases und dem Druck des entsprechenden Produktes aus, um die Druckverluste in der Adsorberstation und den Rohrleitungen zu kompensieren, kann auf den Einbau eines Regeneriergasverdichters verzichtet werden.

Zur Reinigung von Syntheserohgas das aus einer partiellen Oxidation von Kohle oder Öl stammt, wird vorzugsweise eine bei tiefen Temperaturen (ca. -40°C) arbeitende Rectisolwäsche eingesetzt. Wird aus dem Syntheserohgas neben CO (und H₂) auch Methanolsynthesegas erzeugt, so kann, abhängig von den Produktverhältnissen, vorher zumindest ein Teil des Syntheserohgases eine CO-Konvertierung durchlaufen. Die auf die Rectisolwäsche folgende Adsorberstation wird bevorzugt bei kalter Temperatur betrieben (erhöhte Kapazität der eingesetzten Adsorptionsmittel), um die Größe der Adsorber zu minimieren. Eine Ausgestaltung des erfindungsgemäßen Verfahrens sieht vor, das Synthesegas nach dem Austritt aus der Adsorberstation zur Kälterückgewinnung in die Rectisolwäsche zurückzuführen und dort vorzugsweise gegen das in die Rectisolwäsche einströmende Syntheserohgas anzuwärmen, bevor es in die kryogene Gaszerlegungseinheit weiter geleitet wird. Dies ist vor allem dann sinnvoll, wenn der in der Rectisolwäsche eingesparte Energiebedarf (Fremdkälte, Verdichterleistung) gegenüber dem Aufwand in der kryogenen Gaszerlegungseinheit bei erhöhter Eintrittstemperatur überwiegt. Für eine Anwärmung des gereinigten Synthesegases in der Rectisolwäsche spricht auch, dass bei erhöhter Eintrittstemperatur, die aus der kryogenen Gaszerlegungseinheit stammenden Produkte nicht separat, extern (z. B. in gewickelten Wärmetauschern in der Rectisolwäsche) angewärmt werden müssen, was einen erhöhten Druckverlust verursacht, sondern direkt an den Kunden abgegeben bzw., wie im Falle des CO Produktes, direkt der Produktverdichtung zugeführt werden können. Zur Adsorberregenerierung wird ein Teil des angewärmten Synthesegases abgezweigt und mit Hilfe eines Dampf- oder Elektroerhitzers die restliche Temperaturerhöhung durchgeführt. Um die Adsorber nach der Regenerierung wieder auf Betriebstemperatur abzukühlen, wird erfindungsgemäß ein Teilstrom des kalten Synthesegases ohne Anwärmung in der Rectisolwäsche zur Adsorberstation geführt.

Ist eine erhöhte Eintrittstemperatur in die kryogenen Gaszerlegungseinheit nicht akzeptabel (z. B. weil der Prozess keinen Kälteüberschuss besitzt, keine Fremdkälte verfügbar ist oder weil dadurch eine Expansionsturbine notwendig werden würde), wird das gereinigte Synthesegas nach der Adsorberstation direkt der kryogenen Gaszerlegungseinheit zugeführt. Bei dieser Schaltung werden die kalten Zerlegungsprodukte aus der kryogenen Gaszerlegungseinheit vor ihrer Weiterleitung in der Rectisolwäsche bis auf Umgebungstemperatur angewärmt. Eine weitere Ausgestaltung des erfindungsgemäßen Verfahrens sieht vor, den für die Adsorberregenerierung bestimmten Teilstrom des Synthesegases zur Rectisolwäsche zurückzuführen und dort vorzugsweise gegen das in die Rectisolwäsche einströmende Syntheserohgas anzuwärmen, bevor er in die Adsorberstation geleitet und mit Hilfe eines Dampf- oder Elektroerhitzers auf die für die Regenerierung erforderliche Temperatur gebracht wird. Um die Adsorber nach ihrer Regenerierung wieder abzukühlen, wird erfindungsgemäß der Teilstrom des kalten Synthesegases ohne Anwärmung in der Rectisolwäsche zur Adsorberstation geführt.

Im Falle von Synthesegasanlagen, die u. a. auch Methanolsynthesegas produzieren, sieht eine weitere Ausgestaltung des erfindungsgemäßen Verfahrens vor, das Restgas aus der kryogenen Gaszerlegungseinheit wirtschaftlich zu nutzen, indem es über den Recyclegasverdichter der Rectisolwäsche in das Syntheserohgas zurückgeführt wird. Handelt es sich um eine zweisträngige Rectisolwäsche (2-Absorber-Konzept) so wird der Recyclestrom vorzugsweise in den Syntheserohgasstrom aus der CO-Konvertierung eingespeist und damit nach der Wäsche direkt dem Methanolsynthesegas zugeführt.

In Synthesegasanlagen, die regulär Regeneriergas aus der kryogenen Gaszerlegungseinheit nutzen, wird das erfindungsgemäße Verfahren zweckmäßigerweise zumindest während des Anfahrbetriebes, wenn aus der kryogenen Gaszerlegungseinheit noch kein oder nicht genug Gas bezogen werden kann, eingesetzt. In der Regel wird in diesem Fall das Synthesegas nach der Adsorberregenerierung nicht vor die CO₂-Wäsche zurückgeführt, sondern als Brenngas verwendet oder in die Fackel gegeben. Auf einen Regeneriergasverdichter kann verzichtet werden, da ausreichend Druckgefälle zur Verfügung steht. Alternativ dazu kann das Regeneriergas auch in eine Druckwechseladsorptionsanlage (DWA) geführt werden, um Reinwasserstoff zu gewinnen.

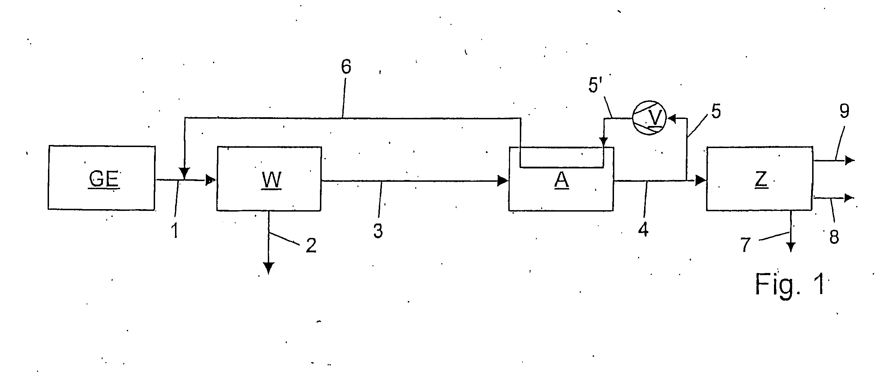

Im Folgenden soll das erfindungsgemäße Verfahren anhand der in den **Figuren 1** bis **6** schematisch dargestellten Ausführungsbeispiele näher erläutert werden. In den Figuren bezeichnen gleiche Symbole gleiche Anlagenteile bzw. Leitungen, in denen gleiche Stoffe transportiert werden.

In **Fig. 1** ist ein Verfahren schematisch abgebildet, wobei ein Verdichter in der Regeneriergasleitung zur Rückführung des beladenen Regeneriergases vor die CO₂-Wäsche eingesetzt wird.

Das aus der Synthesegaserzeugung **GE** kommende Syntheserohgas wird über Leitung **1** der CO₂-Wäsche **W** zugeführt. Dort wird der größte Teil des CO₂ - aber auch anderer unerwünschter Stoffe - ausgewaschen und über Leitung **2** aus dem Prozess entfernt. Über Leitung **3** gelangt das Syntheserohgas in die Adsorberstation **A,** wo es von den noch verbliebenen Resten an unerwünschten Stoffen gereinigt wird, bevor es über Leitung **4** in die kryogene Gaszerlegungseinheit **Z** geleitet wird. Die Restgasfraktion aus **Z** wird über Leitung **7** auf ein Fackel gegeben, während die CO-und die H₂-Fraktion über die Leitungen **8** und **9** weitergeführt werden.

Dem gereinigten Synthesegasstrom wird ein Teilstrom entnommen und über die Leitungen **5** und **5'** als Regeneriergas zur Adsorberstation **A** zurückgeführt, wo es nach Aufheizung in einem Dampf- oder Elektroerhitzer (nicht eingezeichnet) durch einen zu regenerierenden Adsorber strömt und sich mit den dort desorbierten Stoffen (vor allem CO₂ und Wasser) anreichert. Anschließend wird das beladene Regeneriergas über Leitung **6** vor die CO₂-Wäsche **W** zurückgeleitet und mit dem Syntheserohgasstrom in Leitung **1** gemischt. Das als Regeneriergas genutzte Synthesegas wird also in einem Kreislauf geführt und verbleibt auf diese Weise im Prozess.

An der Entnahmestelle des Regeneriergases hinter der Adsorberstation **A** herrscht ein geringerer Druck als vor der CO₂-Wäsche **W.** Um das als Regeneriergas verwendete Synthesegas bis vor die CO₂-Wäsche **W** zurückführen zu können, muss dieser Druckunterschied sowie der Druckverlust über den Regeneriergasweg kompensiert werden. Zu diesem Zweck ist ein Verdichter **V** in die Regeneriergasleitung vor der Adsorberstation **A** eingebaut.

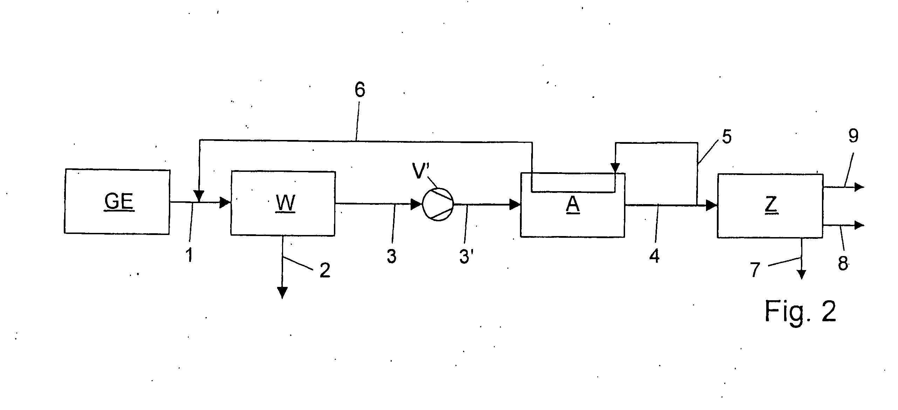

Eine andere Variante des Verfahrens ist in **Fig. 2** schematisch dargestellt. Der einzige Unterschied zu der in **Fig. 1** dargestellten Variante liegt in der Anordnung des Verdichters **V'** im Syntheserohgasstrom, dem das Syntheserohgas über Leitung **3** zuströmt und der es über Leitung **3'** zur Adsorberstation **A** weiter transportiert.

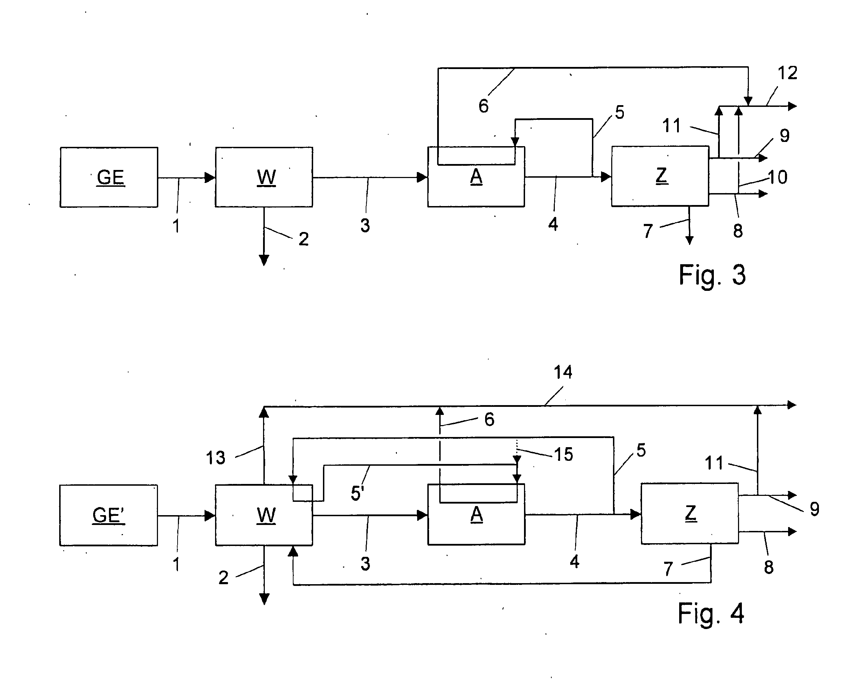

Die **Fig. 3** zeigt schematisch den erfindungsgemäßen. Fall einer Synthesegasanlage, in der neben CO und H₂ auch Oxogas als Produkt erzeugt wird. Zu diesem Zweck werden Teilströme der CO- und der H₂-Fraktion über die Leitungen **10** und **11** abgezweigt und in Leitung **12** zu Oxogas gemischt. Das über Leitung **5** aus dem Synthesegasstrom entnommene, als Regeneriergas verwendete und mit den in der Adsorberstation **A** desorbierten Stoffen beladene Synthesegas wird über Leitung **6** zur Leitung **12** geführt und dort dem Oxogasprodukt beigemischt. Das Druckgefälle zwischen dem Synthesegas und dem Oxogasprodukt ist so hoch, dass auf einen Verdichter zum Transport des Regeneriergases verzichtet werden kann.

Die **Fig. 4** zeigt schematisch den Fall einer Synthesegasanlage, in der neben CO und H₂ auch Methanolsynthesegas als Produkt erzeugt wird. Das Syntheserohgas, das in **GE'** erzeugt und abhängig von den Produktverhältnissen zumindest teilweise einer CO-Konvertierung unterzogen wird, gelangt über Leitung **1** zur CO₂-Wäsche **W,** die als Rectisolwäsche ausgeführt ist und bei ca. -40°C arbeitet. Ein Teilstrom des (in der Wäsche behandelten) Syntheserohgases wird über Leitung **13** aus **W** abgezweigt und mit einem Teilstrom der H₂-Fraktion, die über Leitung **11** zugeleitet wird, in Leitung **14** zu Methanolsynthesegas gemischt. Das über Leitung **5** dem Synthesegasstrom entnommene Regeneriergas wird zur CO₂-Wäsche **W,** zurückgeführt, dort gegen das über Leitung **1** einströmende Syntheserohgas angewärmt und über Leitung **5'** zur Regenerierung der Adsorber in die Adsorberstation **A** geleitet. Das beladene Regeneriergas strömt über Leitung **6** ab und wird in Leitung **14** dem Methanolsynthesegas beigemischt. Um einen Adsorber nach seiner Regenerierung wieder abzukühlen, wird der Regeneriergasstrom über Leitung **5'** unterbrochen und stattdessen Synthesegas, das nicht in der Rectisolwäsche angewärmt wird, dem Adsorber über Leitung **15** zugeführt. Das Restgas aus der kryogenen Gaszerlegungseinheit **Z** wird über Leitung **7** zur CO₂-Wäsche **W** zurückgeführt, dort durch einen Recyclegasverdichter (nicht gezeigt) in das Syntheserohgas verdichtet und schließlich über Leitung **13** in das Methanolsynthesegas geführt.

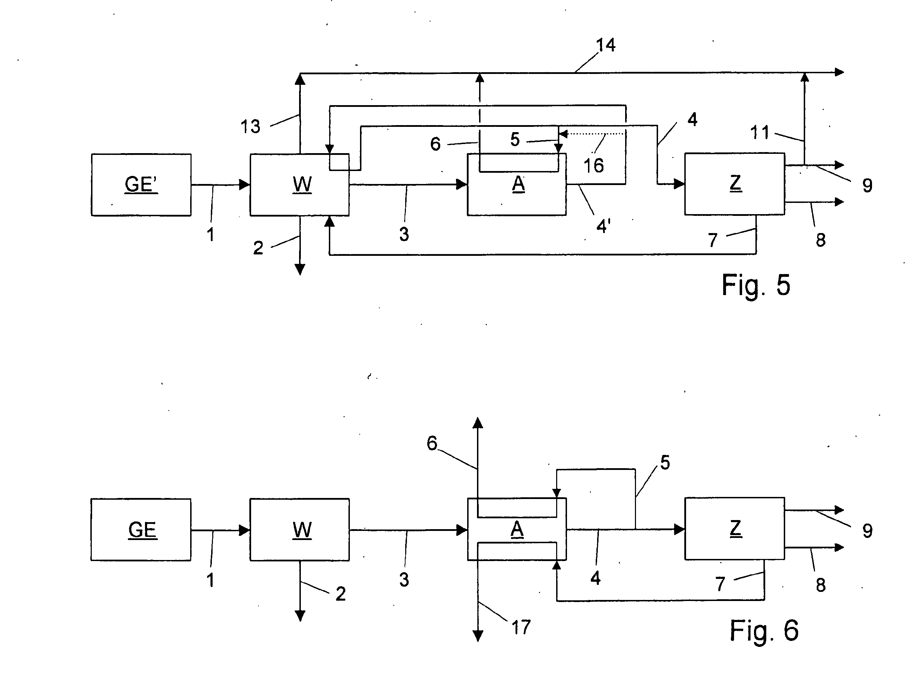

Die **Fig. 5** zeigt schematisch ebenfalls eine Synthesegasanlage, in der neben CO und H₂ auch Methanolsynthesegas als Produkt erzeugt wird. Das gereinigte Synthesegas wird über Leitung **4'** zur CO₂-Wäsche zurückgeführt und gegen das über Leitung **1** einströmende Syntheserohgas angewärmt, bevor es über Leitung **4** in die kryogene Gaszerlegungseinheit **Z** weitergeleitet wird. Über Leitung **5** wird ein Teilstrom aus dem angewärmten Synthesegas abgezweigt und zu den Adsorbern in die Adsorberstation **A** geführt. Das beladene Regeneriergas strömt über Leitung **6** ab und wird in Leitung **14** dem Methanolsynthesegas beigemischt. Um die Adsorber nach ihrer Regenerierung wieder abzukühlen, wird der Regeneriergasstrom über Leitung **5** unterbrochen und stattdessen Synthesegas, das nicht in der CO₂-Wäsche angewärmt wird, über Leitung **16** zugeführt.

In **Fig. 6** ist eine Verfahrensvariante skizziert, die es erlaubt, die Adsorber während des Anfahrbetriebes zu regenerieren, wenn noch kein oder nicht genügend reguläres Regeneriergas, das über Leitung **7** aus der kryogenen Gaszerlegungseinheit **Z** zugeführt und beladen über Leitung **17** abgeführt wird, zur Regenerierung der Adsorber zur Verfügung steht. Das über Leitung **5** entnommene gereinigte Synthesegas wird als Regeneriergas durch die Adsorberstation geleitet. Das beladene Regeneriergas wird über Leitung **6** abgeführt und als Brenngas verwendet oder in die Fackel gegeben. Alternativ dazu kann das beladene Regeneriergas auch in eine Druckwechseladsorptionsanlage (DWA) geführt werden, um Reinwasserstoff zu gewinnen.

## Patentansprüche

1. Verfahren zur Regenerierung der Adsorber einer Adorberstation (A), die zur Reinigung des einer kryogenen Gaszerlegungseinheit (Z) einer Synthesegasanlage, in der ein Oxogasprodukt (12) oder Methanolsynthesegas (14) gewonnen wird, zuströmenden Synthesegases (3) eingesetzt wird, wobei dem gereinigten Synthesegasstrom (4) hinter der Adsorberstation (A), jedoch noch vor seiner kryogenen Zerlegung (Z), ein Teilstrom (5) entnommen und als Regeneriergas zur Regenerierung der Adsorber zur Adsorberstation (A) zurückgeführt wird, **dadurch gekennzeichnet, dass** das als Regeneriergas verwendete Synthesegas (6) nach dem Durchtritt durch den oder die zu regenerierenden Adsorber dem Oxogasprodukt (12) bzw. dem Methanolsynthesegas (14) beigemischt wird.

2. Verfahren nach Anspruch 1, **dadurch gekennzeichnet, dass** in Anlagen, in denen unter anderem auch Methanolsynthesegas (14) erzeugt wird, das Synthesegas (4') nach der Reinigung in der Adsorberstation (A) zur CO₂-Wäsche (W) zurückgeführt, dort vorzugsweise gegen das abzukühlende Syntheserohgas (1) angewärmt und anschließend zur kryogenen Gaszerlegungseinheit (Z) weitergeleitet wird, wobei dem angewärmten Synthesegasstrom (4) nach der CO₂-Wäsche(W), jedoch noch vor seiner kryogenen Zerlegung (Z), ein Teilstrom (5) entnommen und als Regeneriergas zur Regenerierung der Adsorber der Adsorberstation (A) verwendet wird und das beladene Regeneriergas (6) in das Methanolsynthesegas (14) eingespeist wird.

3. Verfahren nach Anspruch 2, **dadurch gekennzeichnet, dass** dem Synthesegasstrom (4) nach der Adsorberstation (A), jedoch noch vor der CO₂-Wäsche (W), ein Teilstrom (16) entnommen und zur Kühlung der Adsorber der Adsorberstation (A) nach der Regenerierung verwendet und anschließend in das Methanolsynthesegas (14) eingespeist wird.

4. Verfahren nach Anspruch 1, **dadurch gekennzeichnet, dass** in Anlagen, in denen unter anderem auch Methanolsynthesegas erzeugt wird, das Regeneriergas (5) zur CO₂-Wäsche (W) zurückgeführt und dort vorzugsweise gegen das abzukühlende Syntheserohgas (1) angewärmt, zur Regenerierung der Adsorber der Adsorberstation (A) verwendet und anschließend in das Methanolsynthesegas (14) eingespeist wird.

5. Verfahren nach Anspruch 4, **dadurch gekennzeichnet, dass** zur Kühlung der Adsorber der Adsorberstation (A) nach der Regenerierung kaltes Synthesegas (15) verwendet wird, das nicht in der CO₂-Wäsche (W) angewärmt wird und das anschließend in das Methanolsynthesegas (14) eingespeist wird.

6. Verfahren nach Anspruch 1, **dadurch gekennzeichnet, dass** in Synthesegasanlagen, welche regulär Gas aus der kryogenen Gaszerlegungseinheit als Regeneriergas nutzen, ein Teilstrom des Synthesegases als Regeneriergas verwendet wird, solange während des Anfahrbetriebes kein oder nicht genügend reguläres Regeneriergas zur Verfügung steht, wobei das Synthesegas nach dem Durchtritt durch den oder die zu regenerierenden Adsorber als Brenngas verwendet oder in die Fackel gegeben oder zur Gewinnung von Reinwasserstoff in eine Druckwechseladsorptionsanlage (DWA) geführt wird.

## Claims

1. Process for regenerating the adsorbers in an adsorber station (A), which is used to purify the synthesis gas (3) flowing to a cryogenic gas separation unit (Z) of a synthesis gas installation, in which an oxo gas product (12) or a methanol synthesis gas (14) is obtained, wherein a part-stream (5) is removed from the purified synthesis gas stream (4) downstream of the adsorber station (A) but upstream of its cryogenic separation (Z), and this part-stream (5) is returned to the adsorber station (A) as regeneration gas for regenerating the adsorbers, **characterized in that** the synthesis gas (6) used as regeneration gas, after it has passed through the adsorber(s) to be regenerated, is admixed with the oxo gas product (12) or the methanol synthesis gas (14).

2. Process according to Claim 1, **characterized in that** in installations, in which methanol synthesis gas (14) is generated among other products, the synthesis gas (4'), following the purification in the adsorber station (A), is returned to the CO₂ scrub (W), where it is preferably warmed against the crude synthesis gas (1) to be cooled and then passed on to the cryogenic gas separation unit (Z), with a part-stream (5) being removed from the warmed synthesis gas stream (4) downstream of the CO₂ scrub (W) but upstream of its cryogenic separation (Z), and this part-stream being used as regeneration gas for regenerating the adsorbers of the adsorber station (A), and the laden regeneration gas (6) then being fed into the methanol synthesis gas (14).

3. Process according to Claim 2, **characterized in that** a part-stream (16) is removed from the synthesis gas stream (4) downstream of the adsorber station (A) but upstream of the CO₂ scrub (W) and is used to cool the adsorbers of the adsorber station (A) downstream of the regeneration and then fed into the methanol synthesis gas (14).

4. Process according to Claim 1, **characterized in that** in installations in which methanol synthesis gas is generated among other products, the regeneration gas (5) is returned to the CO₂ scrub (W), where it is preferably warmed against the crude synthesis gas (1) to be cooled, is used to regenerate the adsorbers of the adsorber station (A) and is then fed into the methanol synthesis gas (14).

5. Process according to Claim 4, **characterized in that** cold synthesis gas (15), which is not warmed in the CO₂ scrub (W) and is then fed into the methanol synthesis gas (14), is used to cool the adsorbers of the adsorber station (A) after the regeneration.

6. Process according to Claim 1, **characterized in that** in synthesis gas installations which generally utilize gas from the cryogenic gas separation unit as regeneration gas, a part-stream of the synthesis gas is used as regeneration gas if, during start-up operation, the usual regeneration gas is unavailable or is only available in insufficient quantities, with the synthesis gas being used as fuel gas after it has passed through the adsorber(s) to be regenerated or being added to the flare or passed into a pressure swing adsorption (PSA) installation for obtaining pure hydrogen.

## Revendications

1. Procédé de régénération des adsorbants d'une station d'adsorption (A), qui est utilisée pour l'épuration du gaz de synthèse (3) arrivant à une unité cryogénique de fractionnement du gaz (Z) d'une installation de gaz de synthèse, dans laquelle on fabrique un produit d'oxogaz (12) ou un gaz de synthèse de méthanol (14), dans lequel on prélève dans le courant de gaz de synthèse épuré (4), après la station d'adsorption (A) mais encore avant son fractionnement cryogénique (Z), un courant partiel (5) et on le renvoie à la station d'adsorption (A) sous forme de gaz de régénération pour la régénération des adsorbants, **caractérisé en ce que** le gaz de synthèse (6) utilisé comme gaz de régénération est mélangé au produit d'oxogaz (12) ou au gaz de synthèse de méthanol (14) après le passage à travers le ou les adsorbants à régénérer.

2. Procédé selon la revendication 1, **caractérisé en ce que**, dans des installations dans lesquelles on produit entre autres aussi du gaz de synthèse de méthanol (14), le gaz de synthèse (4) est renvoyé au lavage du CO₂ (W) après l'épuration dans la station d'adsorption (A), il y est réchauffé de préférence contre le gaz de synthèse brut à refroidir (1) et il est ensuite retransmis à l'unité cryogénique de fractionnement du gaz (Z), dans lequel on prélève dans le courant de gaz de synthèse réchauffé (4) après le lavage du CO₂ (W), mais encore avant son fractionnement cryogénique (Z), un courant partiel (5) et on l'utilise comme gaz de régénération pour la régénération des adsorbants de la station d'adsorption (A) et le gaz de régénération chargé (6) est ajouté dans le gaz de synthèse de méthanol (14).

3. Procédé selon la revendication 2, **caractérisé en ce que** l'on prélève dans le courant de gaz de synthèse (4), après la station d'adsorption (A) mais encore avant le lavage du CO₂ (W), un courant partiel (16) et on l'utilise pour le refroidissement des adsorbants de la station d'adsorption (A) après la régénération et on l'ajoute ensuite dans le gaz de synthèse de méthanol (14).

4. Procédé selon la revendication 1, **caractérisé en ce que**, dans des installations dans lesquelles on produit entre autres aussi du gaz de synthèse de méthanol, le gaz de régénération (5) est renvoyé au lavage du CO₂ (W) et il y est réchauffé de préférence contre le gaz de synthèse brut à refroidir (1), il est utilisé pour la régénération des adsorbants de la station d'adsorption (A) et il est ensuite ajouté dans le gaz de synthèse de méthanol (14).

5. Procédé selon la revendication 4, **caractérisé en ce que** l'on utilise pour le refroidissement des adsorbants de la station d'adsorption (A) après la régénération du gaz de synthèse froid (15), qui n'est pas réchauffé dans le lavage du CO₂ (W) et qui est ajouté ensuite dans le gaz de synthèse de méthanol (14).

6. Procédé selon la revendication 1, **caractérisé en ce que**, dans des installations de gaz de synthèse, qui utilisent un gaz régulier provenant de l'unité cryogénique de fractionnement du gaz comme gaz de régénération, on utilise un courant partiel du gaz de synthèse comme gaz de régénération, aussi longtemps que l'on ne dispose pas ou pas assez de gaz de régénération régulier pendant la période de démarrage, dans lequel le gaz de synthèse, après le passage travers le ou les adsorbants à régénérer, est utilisé comme gaz combustible ou est envoyé à la torchère ou est conduit à une installation d'adsorption à pression alternée (DWA) pour l'obtention d'hydrogène pur.
